# FASCICULE DE BREVET EUROPEEN

(11) **EP 3 704 942 B1**
(45) Date de publication et mention de la délivrance du brevet: **06.09.2023**
(21) Numéro de dépôt: 20160950.0
(22) Date de dépôt: 04.03.2020
(51) Int. Cl.: A01N 37/14, A01P 13/00, A01P 21/00, A01N 25/26, A01N 25/08

(54) **UTILISATION COMME RÉGULATEUR DE CROISSANCE VÉGÉTALE ET/OU HERBICIDE**
EINSATZ ALS PFLANZENWACHSTUMSREGULATOR UND/ODER HERBIZID
USE AS A PLANT GROWTH REGULATOR AND/OR HERBICIDE

(30) Priorité: 05.03.2019 FR 1902237
(43) Date de publication de la demande: 09.09.2020
(73) Titulaire: FILAB, 21074 Dijon Cedex (FR); APRR, 21850 Saint Apollinaire (FR)
(72) Inventeur: Jérôme, GOUX, 21850 SAINT APOLLINAIRE (FR)
(74) Mandataire: Oudin, Stéphane

(56) Documents cités:
- WO-A1-89/03178
- WO-A1-91/05472
- WO-A1-2015/034488
- US-A- 5 098 467
- DATABASE WPI Week 201056 Thomson Scientific, London, GB; AN 2010-J56294 XP002793648, & CN 101 743 964 A (SHANGHAI AGRIC SCI ACAD) 23 juin 2010 (2010-06-23)
- DATABASE CAPLUS [Online] CHEMICAL ABSTRACTS SERVICE, COLUMBUS, OHIO, US; CAO, CAO ET AL: "Chain-Length-Dependent Autocatalytic Hydrolysis of Fatty Acid Anhydrides in Polyethylene Glycol", XP002799304, extrait de STN Database accession no. 2014:340545 & CAO, CAO ET AL: "Chain-Length-Dependent Autocatalytic Hydrolysis of Fatty Acid Anhydrides in Polyethylene Glycol", JOURNAL OF PHYSICAL CHEMISTRY B , 118(12), 3461-3468 CODEN: JPCBFK; ISSN: 1520-5207, 2014, DOI: 10.1021/JP4125233 10.1021/JP4125233

## Description

### Domaine technique de l'invention

La présente invention concerne un régulateur de croissance végétale et un herbicide. Plus particulièrement, la présente invention concerne l'utilisation de l'anhydride nonanoïque comme régulateur de croissance végétale et/ou herbicide. La présente invention concerne également des compositions et des procédés régulant la croissance végétale et/ou herbicides.

### État de la technique antérieure

L'utilisation du glyphosate comme herbicide est de plus en plus contestée par les autorités réglementaires et par le grand public.

Les solutions alternatives au glyphosate disponibles pour les agriculteurs sont manuelles ou mécaniques. Plusieurs sont déjà utilisées par les collectivités locales françaises, qui ne peuvent plus utiliser le glyphosate dans les espaces ouverts au public depuis janvier 2017.

Il existe notamment des méthodes préventives, comme la rotation des cultures (qui permet de rompre régulièrement le développement des mauvaises herbes, qui sont différentes selon les plantes cultivées), le faux semis (la préparation des champs plusieurs semaines avant le semis pour permettre aux mauvaises herbes de germer, et les éliminer mécaniquement avant d'ensemencer réellement), ou encore le paillage (qui consiste à recouvrir les sols de matériaux d'origine végétale et minérale, ou bien de certains matériaux synthétiques, pour stopper la croissance des adventices).

Des moyens mécaniques permettent également d'endiguer la pousse des mauvaises herbes en arrachant ou en détruisant les racines des plantes non désirées. Il existe différents types de machines en fonction des cultures et de leurs spécificités, certaines coupant les racines à plusieurs centimètres de profondeurs, d'autres utilisant des herses, qui agissent sur le sol en surface. Les exploitants peuvent aussi pratiquer le désherbage thermal, en passant des flammes, de l'eau chaude ou de la vapeur d'eau sur les plantes adventices pour les faire mourir.

Ces méthodes présentent toutefois des inconvénients. Elles affectent notamment la structure des sols et peuvent accroître leur érosion. Elles nécessitent également des dépenses d'énergie conséquentes, et ne sont pas toutes adaptées aux grandes exploitations.

L'utilisation de l'acide pélargonique (acide nonanoïque) comme désherbant, seul ou en combinaison a été décrit, dans l'art antérieur. Parmi les documents décrivant cette utilisation on peut notamment citer CN101743964, US5098467, WO8903178 et WO9105472.

Par ailleurs, les documents Cao Cao et al. (The Journal of Physical Chemistry B 2014 118 (12), 3461-3468) et WO2015034488 décrivent des particules encapsulant de l'anhydride nonanoïque et l'hydrolyse de l'anhydride nonanoïque contenu dans ces particules.

Pour l'heure, il n'existe pas de produit biologique qui ait une efficacité équivalente au glyphosate.

De ce fait, trouver une solution alternative à l'utilisation du glyphosate représente un enjeu stratégique majeur.

Pour être acceptée, cette alternative devra présenter une efficacité équivalente voire supérieure au glyphosate et ne pas être nocive pour l'environnement ou pour la santé humaine. De plus, il serait souhaitable que le produit utilisé puisse l'être sous forme solide ou liquide afin de moduler son mode d'action et surtout bénéficier d'un meilleur contrôle de son mode de diffusion.

Idéalement, en plus d'une action désherbante le produit devra avoir une action de régulateur de croissance pour limiter le nombre d'application saisonnière et les étapes de débroussaillage et de tonte mécanique.

### Présentation de l'invention

La présente invention se propose de résoudre les problèmes décrits précédemment.

Ainsi la présente invention concerne l'utilisation de l'anhydride nonanoïque comme régulateur de croissance végétale et/ou herbicide.

En effet, il a été montré par la déposante que l'anhydride nonanoïque présente une activité régulatrice de la croissance des végétaux et herbicide.

Dans le cadre de la présente invention, le terme « régulateur de croissance » fait référence à un produit et/ou un procédé engendrant une croissance plus faible de tout ou partie d'un végétal par rapport au même type de végétal cultivé dans les mêmes conditions en l'absence dudit produit et/ou procédé. Selon un mode de réalisation préféré de l'invention, ledit herbicide est un herbicide foliaire.

Dans le cadre de la présente invention, le terme « herbicide foliaire » fait référence au fait que l'effet herbicide est notamment obtenu après contact entre l'anhydride nonanoïque et les feuilles du végétal à traiter.

Selon un mode de réalisation alternatif ou complémentaire préféré de l'invention, ledit herbicide est un herbicide racinaire.

Dans le cadre de la présente invention, le terme « herbicide racinaire » fait référence au fait que l'effet herbicide est notamment obtenu après contact entre l'anhydride nonanoïque et les racines du végétal à traiter.

Selon un mode de réalisation préféré de l'invention, ledit anhydride nonanoïque est absorbé sur un matériau solide poreux.

Dans le cadre de la présente invention, le terme « solide poreux » entend désigner toutes les particules, comprenant des pores et/ou une cavité interne, apte à retenir l'anhydride nonanoïque.

Le matériau solide poreux utilisé peut être choisi dans le groupe comprenant les minéraux poreux (e.g. les argiles, les talcs, la silice) et le charbon actif.

Selon un mode de réalisation préféré de l'invention, ledit matériau solide poreux est la silice.

Selon un autre mode de réalisation préféré de l'invention, ledit anhydride nonanoïque est encapsulé.

Par « encapsulé » on entend désigner le fait que ledit anhydride nonanoïque est emprisonné dans une particule. Ledit anhydride nonanoïque peut être indifféremment encapsulé à l'intérieur d'une particule creuse et/ou dans la paroi d'une particule creuse ou pleine.

Selon un mode de réalisation encore plus préféré de l'invention, ledit anhydride nonanoïque est encapsulé dans une particule solide.

Avantageusement, le composé constituant en tout ou partie la particule encapsulant l'anhydride nonanoïque est un polymère, préférentiellement solide à température ambiante. Avantageusement, le composé constituant en tout ou partie la particule encapsulant l'anhydride nonanoïque est un polymère soluble dans l'eau.

Selon un mode de réalisation tout à fait préféré, ladite particule solide comprend du polyéthylène glycol ou est constitué de polyéthylène glycol.

Le polyéthylène glycol a préférentiellement une masse moléculaire comprise entre 200 et 35000 g/mol encore plus préférentiellement entre 600 et 20000 g/mol et tout à fait préférentiellement entre 1000 et 10000 g/mol.

Afin d'encapsuler de l'anhydride nonanoïque dans du polyéthylène glycol, il est par exemple possible de porter le polyéthylène glycol à une température supérieure à sa température de fusion et de le mélanger avec de l'anhydride nonanoïque. Une fois un mélange homogène obtenu, ce dernier est ramené à une température inférieure à sa température de fusion. Le bloc obtenu peut ensuite être broyé pour obtenir une poudre constituée de particules selon l'invention.

Les déposantes ont pu mettre en évidence que les particules ci-dessus décrites permettaient d'obtenir des résultats supérieurs à l'utilisation de l'anhydride nonanoïque seul. Selon un mode de réalisation préféré de l'invention, le ratio polymère/anhydride nonanoïque (poids/poids) de ladite particule est compris entre 5% et 50%, préférentiellement entre 10% et 30%.

Selon un mode de réalisation préféré de l'invention, ledit anhydride nonanoïque ou la composition comprenant ledit anhydride nonanoïque est sous forme liquide.

Selon un mode de réalisation préféré de l'invention, ledit anhydride nonanoïque est compris dans une composition à une concentration supérieure à 5% en masse.

Selon un mode de réalisation préféré de l'invention, ledit anhydride nonanoïque est compris dans une composition à une concentration supérieure à 10% en masse.

Selon un mode de réalisation préféré de l'invention, ledit anhydride nonanoïque est compris dans une composition à une concentration supérieure à 20% en masse.

Selon un mode de réalisation préféré de l'invention, ledit anhydride nonanoïque est compris dans une composition à une concentration comprise entre 5 et 50% en masse et encore plus préférentiellement entre 30 et 50% en masse.

La présente invention concerne également pour la régulation de la croissance de plantes ou un procédé pour la lutte contre des plantes nuisibles, remarquable en ce qu'on applique sur les plantes, parties de plantes, semences de plantes ou sur une aire une quantité efficace d'un anhydride nonanoïque. Dans le cadre de la présente invention, le terme « quantité efficace » fait référence à une quantité de produit permettant d'obtenir l'effet herbicide et/ou régulateur de croissance souhaité.

Préférentiellement, ladite quantité efficace est supérieure à 20 g d'anhydride nonanoïque par m² de surface à traiter.
[Fig. 1] est une représentation de l'anhydride nonanoïque.
[Fig. 2] montre l'action de l'anhydride nonanoïque, comparée à celle de l'acide pelargonique, pulvérisé pur par spray sur les feuilles d'adventices dans une étendue herbeuse présentant différents types d'adventices herbacés.
[Fig. 3] montre l'action de l'anhydride nonanoïque, comparée à celle de l'acide pelargonique, déposé pur au sol dans une étendue herbeuse présentant différents types d'adventices herbacés.
[Fig. 4] montre l'action de l'anhydride nonanoïque absorbé à de la silice, déposé au sol dans une étendue herbeuse présentant différents types d'adventices herbacés.

### Description détaillée de l'invention

L'utilisation selon l'invention peut être mise en oeuvre sur tout type de surface (naturelle ou artificielle) et plus particulièrement sur les routes, bas-côtés, voies d'accès, parking et terrasses.

Dans le cadre de l'utilisation selon l'invention, l'anhydride nonanoïque est avantageusement formulé, par exemple sous forme de concentré, de solutions prête à l'emploi, d'aérosol, et/ou associé à un solide. Ce dernier peut être notamment sous forme de poudre, de comprimé et/ou de tablettes.

La formulation (ou composition) comprenant l'anhydride nonanoïque, pour utilisation selon l'invention, peut comprendre en outre des agents supplémentaires tels que des agents facilitant la pénétration, des colorants, des émulsifiants, des dispersants, des agents mouillants, des liants, des épaississants et/ou des conservateurs.

Selon un autre mode de réalisation préféré, la formulation comprend uniquement l'anhydride nonanoïque, uniquement l'anhydride nonanoïque et un solvant ou uniquement l'anhydride nonanoïque absorbé sur un matériau solide poreux. La concentration d'anhydride nonanoïque dans les formulations utilisables dans le cadre de la présente invention peut être facilement estimée par l'homme du métier. Toutefois, il a été montré que des concentrations supérieures à 10%, supérieures à 20% et comprises entre 30 et 50% en masse permettraient d'obtenir une efficacité suffisante.

Dans le cadre de la présente invention un pourcentage en masse fait référence à une quantité en gramme d'anhydride nonanoïque pur pour 100g de masse totale de ladite formulation.

Les formulations liquides, utilisables dans le cadre de la présente invention peut comprendre un ou plusieurs solvants. Des tensioactifs peuvent être utilisés en tant qu'agents facilitant la pénétration, émulsifiants, dispersants, agents mouillants ou autres utilisés dans la formulation.

La quantité de tensioactif utilisée est généralement de 0,1 à 50% en masse, de préférence d'environ 0,1 à 25% en masse, par rapport à une quantité totale de la formulation.

Les liants et les épaississants sont bien connus de l'homme du métier. Il s'agit, par exemple, de la dextrine, des sels de carboxyméthylcellulose, de la polyvinylpyrrolidone, le polyvinylalcool, le mannitol de sodium et du sorbitol.

Le matériau solide poreux sur lequel l'anhydride nonanoïque peut être absorbé permet notamment une meilleure répartition de l'herbicide à la surface du sol.

Les techniques pour absorber ledit anhydride nonanoïque au matériau solide poreux sont bien connues de l'homme du métier. Elles peuvent notamment consister à immerger ledit matériau solide poreux dans de l'anhydride nonanoïque dilué dans un solvant puis à faire évaporer ledit solvant.

La quantité de matériau solide poreux est généralement de 60 à 90% en masse, de préférence d'environ 80 à 90% en masse par rapport à la quantité totale de la formulation.

Le procédé selon l'invention est similaire à un procédé d'application conventionnel pour des produits chimiques agricoles connus et comprend, par exemple, une pulvérisation aérienne, un épandage de terre ou une application sur le feuillage.

L'utilisation selon l'invention peut être mise en oeuvre seul ou avec au moins un autre herbicide, régulateur de croissance des végétaux, fongicide, insecticide, acaricide, nématocide ou mélange de ceux-ci.

### Exemples

### Utilisation foliaire.

Dans une étendue herbeuse présentant différents types d'adventices herbacés, 2 ml de principe actif pur (acide pélargonique ou anhydride nonanoïque) ont été pulvérisés par spray sur les feuilles d'adventices.

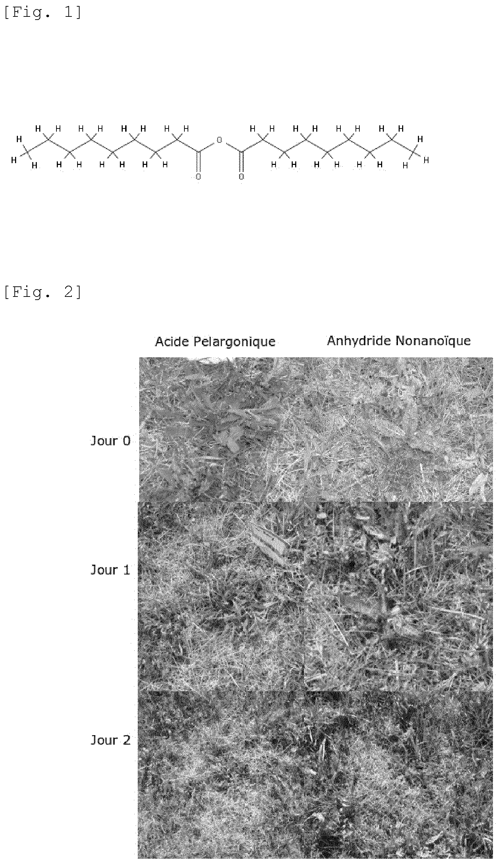

Leur action est suivie et représentée à la [Fig. 2].

Une dégradation de l'adventice (et des végétaux alentours) est constatée après 1 jour quel que soit le produit utilisé. Les effets de l'assèchement sont visibles quelques heures après pulvérisation. La destruction de l'adventice est quasi-totale après 2 jours. L'absence de pluie pendant la durée de l'analyse permet de mettre en évidence l'action désherbante du l'anhydride nonanoïque sous sa forme d'anhydride.

### Utilisation racinaire.

Le produit (acide pélargonique ou anhydride nonanoïque) est déposé pur sous forme liquide au sol conduisant à une assimilation par les racines suite à l'adsorption du produit dans la terre.

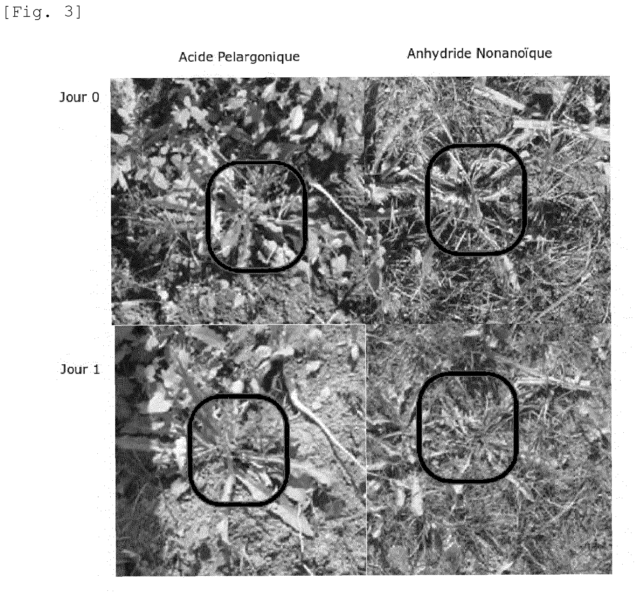

Deux ml d'acide pélargonique ou d'anhydride nonanoïque sont déposés à la base des adventices. Leur action est suivie et représentée à la [Fig. 3].

Une dégradation localisée et progressive des adventices est remarquée pour les deux produits. En effet, après un jour d'action, l'adventice n'est pas affectée en totalité par le produit et seul un jaunissement de la partie centrale est observé. Après 4 jours, l'adventice est totalement détruit. L'absence de pluie pendant l'étude montre que le principe actif est bien de l'anhydride nonanoïque et pas un de ses produits de dégradation.

### Utilisation sous forme absorbée.

L'imprégnation d'un solide (tel que de la silice) par de l'anhydride nonanoïque a été effectuée pour générer des formulations solides avec des teneurs variables en anhydride (%v/m) .

Un volume V (ml) d'anhydride nonanoïque est ajouté à une suspension de m g de silice dans un solvant puis l'ensemble est maintenu sous agitation pendant 30 minutes. Après évaporation du solvant et séchage, la composition solide est obtenue.

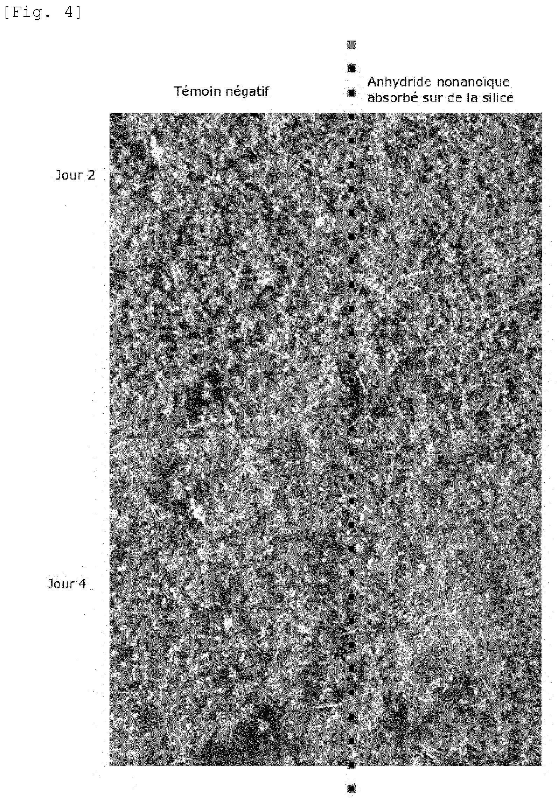

L'efficacité d'une formulation solide à 20%(%v/m) a été étudiée par dispersion de 5g de produit en poudre sur une surface herbeuse. Un arrosage de la surface traitée a été effectué afin de faciliter l'assimilation du désherbant. Les effets sont montrés [Fig. 4].

On constate qu'après deux jours un effet désherbant est observé. La dégradation est maximale 4 jours après l'application du produit.

## Revendications

1. Utilisation de l'anhydride nonanoïque comme régulateur de croissance végétale et/ou herbicide.

2. Utilisation de l'anhydride nonanoïque selon la revendication 1 **caractérisée en ce que** ledit herbicide est un herbicide foliaire.

3. Utilisation de l'anhydride nonanoïque selon la revendication 1 **caractérisée en ce que** ledit herbicide est un herbicide racinaire.

4. Utilisation de l'anhydride nonanoïque selon l'une des revendications 1 à 3 **caractérisée en ce que** ledit anhydride nonanoïque est absorbé sur un matériau solide poreux.

5. Utilisation de l'anhydride nonanoïque selon la revendication 4 **caractérisée en ce que** ledit matériau solide poreux est la silice.

6. Utilisation de l'anhydride nonanoïque selon l'une des revendications 1 à 3 **caractérisée en ce que** ledit anhydride nonanoïque est encapsulé dans une particule solide.

7. Utilisation de l'anhydride nonanoïque selon la revendication 6 **caractérisée en ce que** le composé constituant en tout ou partie la particule encapsulant l'anhydride nonanoïque est du polyéthylène glycol.

8. Utilisation de l'anhydride nonanoïque selon l'une des revendications 1 à 7 **caractérisée en ce que** ledit anhydride nonanoïque est compris dans une composition à une concentration supérieure à 5% en masse.

9. Utilisation de l'anhydride nonanoïque selon la revendication 8 **caractérisée en ce que** ledit anhydride nonanoïque est compris dans une composition à une concentration comprise entre 5 et 50% en masse.

10. Procédé pour la régulation de la croissance de plantes ou la lutte contre des plantes nuisibles , **caractérisé en ce qu'**on applique sur les plantes, parties de plantes, semences de plantes ou sur une aire une quantité efficace d'un anhydride nonanoïque.

## Patentansprüche

1. Verwendung von Nonansäureanhydrid als Pflanzenwachstumsregulator und/oder Herbizid.

2. Verwendung von Nonansäureanhydrid nach Anspruch 1, **dadurch gekennzeichnet, dass** das Herbizid ein Blattherbizid ist.

3. Verwendung von Nonansäureanhydrid nach Anspruch 1, **dadurch gekennzeichnet, dass** das Herbizid ein Wurzelherbizid ist.

4. Verwendung von Nonansäureanhydrid nach einem der Ansprüche 1 bis 3, **dadurch gekennzeichnet, dass** das Nonansäureanhydrid auf einem porösen festen Material absorbiert wird.

5. Verwendung von Nonansäureanhydrid nach Anspruch 4, **dadurch gekennzeichnet, dass** das poröse feste Material Siliziumdioxid ist.

6. Verwendung von Nonansäureanhydrid nach einem der Ansprüche 1 bis 3, **dadurch gekennzeichnet, dass** das Nonansäureanhydrid in einem Feststoffpartikel eingekapselt ist.

7. Verwendung von Nonansäureanhydrid nach Anspruch 6, **dadurch gekennzeichnet, dass** es sich bei der Verbindung, die ganz oder teilweise den Partikel bildet, der das Nonansäureanhydrid einkapselt, um Polyethylenglykol handelt.

8. Verwendung von Nonansäureanhydrid nach einem der Ansprüche 1 bis 7, **dadurch gekennzeichnet, dass** das Nonansäureanhydrid in einer Zusammensetzung in einer Konzentration von mehr als 5 Gew.-% enthalten ist.

9. Verwendung von Nonansäureanhydrid nach Anspruch 8, **dadurch gekennzeichnet, dass** das Nonansäureanhydrid in einer Zusammensetzung in einer Konzentration zwischen 5 und 50 Gew.-% enthalten ist.

10. Verfahren zur Regulierung des Pflanzenwachstums oder zur Bekämpfung von schädlichen Pflanzen, **dadurch gekennzeichnet, dass** auf die Pflanzen, Pflanzenteile, Pflanzensamen oder auf eine Fläche eine wirksame Menge eines Nonansäureanhydrids aufgebracht wird.

## Claims

1. A use of nonanoic anhydride as a plant growth regulator and/or herbicide.

2. The use of nonanoic anhydride according to claim 1, **characterised in that** said herbicide is a foliar herbicide.

3. The use of nonanoic anhydride according to claim 1, **characterised in that** said herbicide is a root herbicide.

4. The use of nonanoic anhydride according to one of claims 1 to 3, **characterised in that** said nonanoic anhydride is absorbed on a porous solid material.

5. The use of nonanoic anhydride according to claim 4, **characterised in that** said porous solid material is silica.

6. The use of nonanoic anhydride according to one of claims 1 to 3, **characterised in that** said nonanoic anhydride is encapsulated in a solid particle.

7. The use of nonanoic anhydride according to claim 6, **characterised in that** the compound, constituting in whole or in part the particle encapsulating the nonanoic anhydride, is polyethylene glycol.

8. The use of nonanoic anhydride according to one of claims 1 to 7, **characterised in that** said nonanoic anhydride is comprised in a composition at a concentration which is greater than 5% by mass.

9. The use of nonanoic anhydride according to claim 8, **characterised in that** said nonanoic anhydride is comprised in a composition at a concentration which is comprised between 5 and 50% by mass.

10. A method for regulating the plant growth or controlling weeds, **characterised in that** an effective amount of a nonanoic anhydride is applied on plants, plant parts, plant seeds or on an area.
